# EUROPEAN PATENT APPLICATION

(11) **EP 0 845 739 A1**
(43) Date of publication of application: **03.06.1998**
(21) Application number: 96402588.6
(22) Date of filing: 29.11.1996
(51) Int. Cl.: G06F 5/06

(54) **A method to transfer data, a transfer device realising the method, a comparator using such a transfer device and a use of such a comparator as a filling level controller of a memory means**

(71) Applicant: ALCATEL ALSTHOM COMPAGNIE GENERALE D'ELECTRICITE, 75008 Paris (FR)
(72) Inventor: De Laender, Jos Camiel Irène, 9620 Zottegem (BE)
(74) Representative: Narmon, Gisèle

(57) **Abstract**

A method to transfer data which includes numbers (... , d2, d3, ...) from a first circuit (CIRC1) to a second circuit (CIRC2). The first circuit (CIRC1) provides the data to buffer means (BUF) at first set times and the second circuit (CIRC2) reads buffered data from the buffer means (BUF) at second set times. When the numbers (..., d2, d3, ...) are successive numbers and when a maximum fault of one is allowed on the buffered data, the method includes that the numbers (..., d2, d3, ...) are represented, at least while being buffered, by a cyclic code such as the Grey reflected binary code and that at least part of the second set times are allowed to be time instants at which the data as buffered by the buffer means (BUF) is unstable.

## Description

The present invention relates to a method to transfer data, as described in the preamble of claim 1, to a transfer device realising this method, as described in the preamble of claim 2, to a comparotor using such a transfer device, as described in the preamble of claim 5 and to a use of such a comparator as a filling level controller of a memory means, as described in the preambles of claims 6 and 7.

Such a method to transfer data and a transfer device are already known in the art, for instance from the book **Design of Logic Systems** written **by D. Lewin and D. Protheroe** and published by **Chapman & Hall, 2-6 Boundary Row, London SE1 8HN, second edition 1992.**

In this book and more particularly on **pages 47 to 50** the temporal behaviour of combinational circuits is described. Circuit components and the connections between them require some time in order for signals to propagate between input and output terminals. During this time, transient behaviour may occur while the signal levels in the circuit are changing following a change in the input data.

The existence and duration of the transient effects is difficult or impossible to predict. But, as described in the book, prevention is better than cure, and a method to detect and avoid the transient moments is explained. This method is called the "handshake sequence".

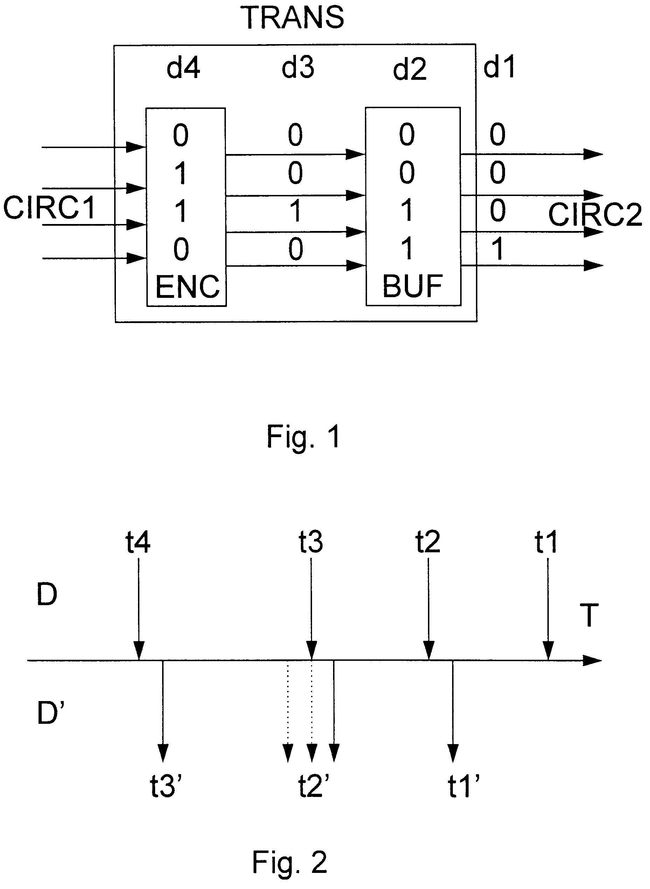

When transferring data between two systems operating at different speed, i.e. at a different frequency, a "four-cycle handshake" sequence is commonly used. This is shown on the **Figure 2.8 of page 49**. In order to operate with a predictive behaviour, which is without making a fault on the transferred data, the transfer of data is avoided during transient behaviour of the circuit, i.e. a set of temporal assertions regarding the required logical and temporal behaviour of the device is constructed and verified.

It has to be remarked here that the data includes numbers which are represented by a digital code. Providing a number to the buffer means, signifies providing all digits which are representing that number simultaneously to a plurality of inputs of the buffer means.

A problem outstanding with this method of verification used to transfer data is that the set of states that must be considered in order to detect and avoid the transient behaviour slows dawn the maximum speed of operation even for a small circuit such as this transfer device.

An object of the present invention is, to provide a method and a transfer device to transfer numbers between two circuits operating at a different frequency, such as the above known one but which is suited for successive numbers and which accepts a maximum fault of one on the result, but which has not the above drawback i.e. which is not slowed dawn by considering the set of states.

According to the present invention the object is achieved by means of the method described in claim 1 and the transfer device described in claim 2. An application of the present invention is the comparator described in claim 5 and a use of this comparator as a filling level controller of a memory means is described in claim 6 and claim 7.

Indeed, instead of detecting and avoiding the transient moments, the present invention ignores the fact that the transfer time may be a moment of transient behaviour or not i.e. the invention ignores the fact that one of the moments of the second set times at which buffered data is read out of the buffer means may be identical or not to one of the moments of the first set times at which data is provided to the buffer means or as mentioned in the claims at which the data is unstable. So, the operation of transferring data is not slowed dawn.

This ignorance can be permitted by representing the successive numbers, at least while being buffered, by a cyclic code such as the Grey reflected binary code and by considering the useful feature of such codes that representation of successive numbers differs from one to another in only one single bit. The maximum fault of reading out data during transient behaviour is only one single bit since only one single bit is changing during this transient behaviour. So, the operation of transferring successive numbers between two circuits operating at different frequency still has a predictive behaviour with namely a maximum fault of one on the result but is not slowed dawn by considering the set of states.

When the operating environment is a Grey encoded environment, the transfer device described in claim 2 is used. This means that the data provided by the first circuit is already Grey encoded and that the requirement to the data, of being Grey encoded at least while being buffered, is fulfilled.

However, when the operating environment is not Grey encoded, the data provided by the first circuit still has to be Grey encoded. This feature is described in claim 3, where an encoder is included in the transfer device. The data is encoded before being provided to the buffer means in order to be encoded at least while being buffered. Of coarse, later on when the encoded data have to be used in an operating environment which is not Grey encoded, the data will have to be decoded first.

The time intervals between the first or the second set times are not necessarily different from one to another but may be made all identical and equal to the period of the operating frequency of the first circuit or to the period of the operating frequency of the second circuit, respectively. This possible implementation of the invention is described in claim 4.

It has to be understood that when transferring successive numbers following the method and the transfer device of the invention, the buffered data includes numbers which are coming out of the provided successive numbers but which are not forming necessarily by themselves successive numbers. This means that in the buffered data, e.g. a provided number is included twice or a provided number is not included at all. The actual value of the buffered data depends on the interaction between the first and the second set times and on the possible fault of one when a first set time equals a second set time.

An application of the method to transfer data and of the transfer device is writing information in a memory at a first frequency and reading out this information at a second frequency. The write addresses, whereto the information is written are generated by a pointer generator at the first frequency and are successive numbers. These write addresses are provided to the transfer device of the invention and are transferred into buffered write addresses which are read from the buffer means at the second frequency. These buffered write addresses are used to access the memory again as being read addresses in order to read out the information in the memory at the second frequency. As explained in the previous paragraph, the transferred addresses, which are here the read addresses to access the memory, will not be properly successive numbers. So, as a consequence, the information, read out of the memory will have a lack of quality.

Another application of the method to transfer data and the transfer device is described in claim 5. This claim relates to a comparator which compares first data generated by a first circuit working at a first frequency f1 with second data generated by a second circuit working at a second frequency f2, in order to determine the difference between the first data and the second data. Since the first data is generated at a first frequency and the second data is generated at a second frequency, comparing them would generate results with an unpredictable fault. By introducing the transfer device of the invention, the first data being the data provided to the buffer means, is transferred to buffered first data being the buffered data which is read from the buffer means at the second frequency. So, the buffered first data as well as the second data are provided at the second frequency and are compared by comparing means which generates thereby a result which is a measure for the difference, with a maximum fault of one.

Indeed, by introducing the transfer device of the invention a predictable maximum fault of one is introduced which has to be taken into account for eventual further operations with the result of the comparator.

Yet, a use of the comparator of claim 5 which is using the invention, is described in claim 6 and claim 7. In these claims a use of such a comparator as a filling level controller of a memory means is described. In order to control the filling level of the memory means, which means in order to control that the read addresses are not going to catch up the write addresses or the reverse, that the write addresses are not going to catch up the read addresses, these addresses have to be compared with each other.

In the preamble of claim 6, the write addresses of the memory means are successive numbers which are generated by a first circuit working at a first frequency' included in the memory means, and the read addresses are generated by a second circuit working at a second frequency included in the memory means. Since the successive write addresses and the read addresses are generated at different frequencies, directly comparing them would generate results with an unpredictable fault. The use of the comparator of claim 5 as a filling level controller includes providing the successive write addresses and the read addresses to the comparator whereby the successive write addresses are the first data provided to the comparator and the read addresses are the second data provided to the comparator. The result is a measure for the filling level of the memory means with a maximum fault of one. Indeed, by introducing the transfer device of the invention, included in the comparator, a predictable maximum fault of one is introduced which has to be taken into account for eventual further operations with the result of the filling level controller.

It has to be remarked that in the above described use of the comparator as a filling level controller the write addresses are transferred to the frequency of the read addresses. But, also the read addresses could be transferred to the frequency' of the write addresses in order to have a measure for the filling level of the memory means. This is described in claim 7. The decision to transfer the write addresses to the frequency of the read addresses or to transfer the read addresses to the frequency of the write addresses depends e.g. on the frequency of the environment wherein the result will be used. Even, transferring as well as write addresses as read addresses to a third frequency can be needed.

The above mentioned and other objects and features of the invention will become more apparent and the invention itself will be best understood by referring to the following description of an embodiment taken in conjunction with the accompanying drawings wherein :
Fig. 1 shows an instantaneous representation of a block scheme of an embodiment of a transfer device according to the present invention.
Fig. 2 is a time line showing different operations in time of the transfer device of Fig. 1 according to the present invention.
Fig. 3 is a block scheme of an embodiment of a filling level controller wherein the transfer device of Fig. 1 is used.

Referring to Fig. 1 a transfer device will be described. First, the working of the transfer device will be explained by means of a functional description of the blocks shown in Fig. 1. Based on this description, implementation of the functional blocks in Fig. 1 will be obvious to a person skilled in the art and will therefor not be described in detail. In addition the principle working of the transfer device will be described in further detail.

The transfer device TRANS includes an encoder ENC and buffer means BUF. The encoder ENC is coupled to a first circuit CIRC1 and to the buffer means BUF which are coupled to a second circuit CIRC2.

The first circuit CIRC1 is operating at a first frequency f1 and the second circuit CIRC2 is operating at a second frequency f2.

The first circuit CIRC1 provides data to the transfer device TRANS at the first frequency f1. The data includes successive numbers. Since Fig. 1 is an instantaneous representation of the data flow through the transfer device TRANS and in order not to overload the figure, only number d2 and number d3 are shown. The encoder ENC encodes the successive numbers into the Grey reflected binary code before providing the numbers to the buffer means BUF. The buffer means BUF buffers the numbers until they are read out by the second circuit CIRC2 at the second frequency f2. The transfer device TRANS provides to the second circuit CIRC2 buffered data.

On the instantaneous representation, number d3 is just Grey encoded in 0010, and number d2 which is already Grey encoded in 0011, is buffered in the buffer means BUF. It has to be remarked that the sixteen Grey code representation is used. With four digits up to the first sixteen decimal numbers can be represented.

As mentioned in the introductory part of this description, each digit of a number is provided simultaneously to a plurality of inputs i.e. to the four inputs of the buffer means BUF. However, as explained also above, due to a change on the four inputs of the buffer means BUF, the signal levels in the buffer means BUF are going to change and transient behaviour may occur.

Fig. 1 shows that the signal levels of the buffer means BUF, which have the level of the previous provided number d2, are going to change towards the signal levels of number d3.

Referring now to Fig. 2 which shows a time line T, the different operations of the transfer device TRANS will be explained. The time line is showing time instants (t1, t2, t3, t4, ...) at which data D is written into the buffer means BUF and time instants (t1', t2', t3', ...) at which buffered data D' is read from the buffer means BUF. For example, starting at the right side of the time line, at time instant t1 number d1 (not shown on Fig. 2) included in data D is written into the buffer means BUF and later on read out the buffer means at time instant t1'. And so, at time instant t2 number d2 (not shown on Fig. 2) part of data D is written into the buffer means BUF and at time instant t3 number d3 (not shown on Fig. 2) part of data D is written into the buffer means BUF.

Referring back to Fig. 1 and the above paragraphs, the instantaneous moment of the representation is identical to time instant t2'. Now, different states can be defined depending on the location of the time instant t2' on the time line T :
- If time instant t2' is located as shown with the right full line on Fig. 2, the digits representing the number as buffered by the buffer means BUF still have the value according to the digits representing number d2 (0011) and are stable; and
- If time instant t2' is located as shown with the left dotted line on Fig. 2, the digits representing the number as buffered by the buffer means BUF have already the value according to the digits representing number d3 (0010) and are stable; but
- If time instant t2' is located as shown with the right dotted line on Fig. 2, each digit of the digits representing the number as buffered by the buffer means BUF has an unpredictable value since they still have the value according to a digit of number d2 or already have the value of a digit of number d3 or are still changing from one value to the other value. So, the number represented by these unstable bits is defined as being unstable and can have any number value.

If buffered data D' is read out the buffer means BUF during a time instant at which the data as buffered by the buffer means BUF is unstable, i.e. during transient behaviour of the buffer means BUF, the result can not be trusted.

However, considering the useful feature of the Grey code that a representation of successive numbers differ from one to another in only one single bit, e.g. number d2 represented as 0011 differs from number d3 represented as 0010 in only the fourth bit, means that during transient behaviour, only this single bit is involved to be changed and only this single bit can not be trusted. So, the number read out the buffer means BUF has either the value of number d2 or of number d3 and the maximum fault on the buffered number is only one.

Taking this maximum fault into account the transfer device TRANS of the invention can be used for different applications. One of the application is described in the following paragraphs.

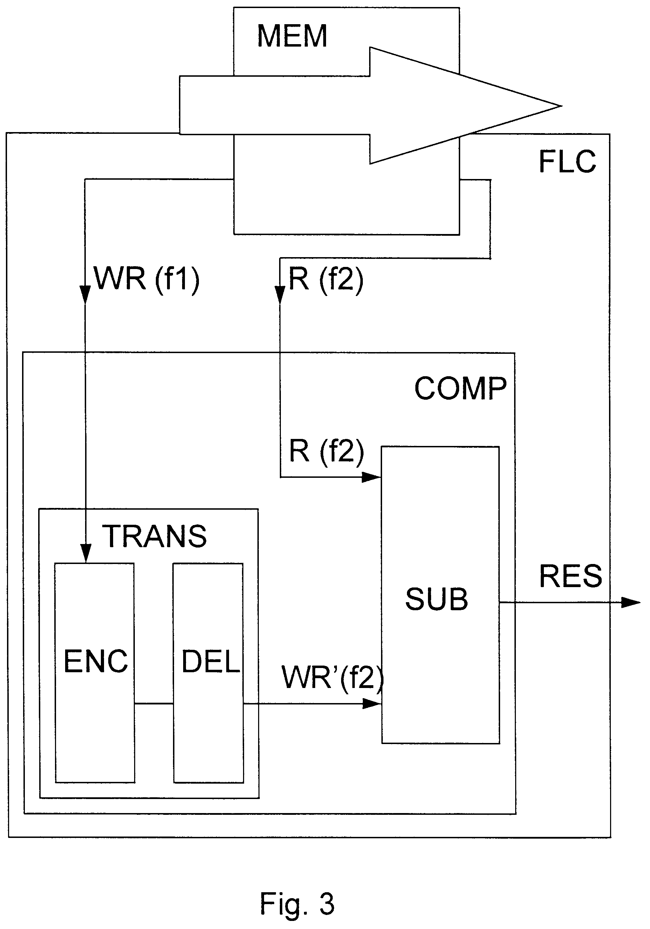

Referring to Fig. 3 a filling level controller FLC wherein the transfer device of the invention is used will be described.

First, the working of the filling level controller FLC will be explained by means of a functional description of the blocks shown in Fig. 3. Based on this description, implementation of the functional blocks in Fig. 3 will be obvious to a person skilled in the art and will therefor not be described in detail. In addition the principle working of the filling level controller FLC will be described in further detail.

Fig. 3 includes a memory means MEM and a filling level controller FLC. The memory means MEM includes a first circuit CIRC1 and a second circuit CIRC2. The filling level controller FLC includes a comparator COMP and two links from the memory means MEM to this comparator COMP, a first link and a second link. The comparator includes the transfer device TRANS of the invention and comparing means CM and the transfer device includes an encoder ENC and buffer means BUF.

As already mentioned, the memory means MEM is coupled to the comparator via the two links of the filling level controller FLC. The first link is coupled to the transfer device TRANS which is coupled to the comparing means CM and the second link is directly coupled to the comparing means CM.

Information data (not shown in order not to overload Fig. 3) is written into the memory means MEM with a first frequency f1 whereby the first circuit CIRC1 generates the write addresses WR (f1) of this information data. These write addresses WR(f1) are successive numbers and are created with the same frequency f1 as the writing frequency f1. Later on, the information data is read from the memory means MEM with a second frequency f2 whereby the second circuit CIRC2 generates the read addresses R(f2) of this information data. These read addresses R(f2) are successive numbers and are created with the same frequency f2 as the reading frequency f2.

The write addresses WR(f1) and read addresses R(f2) are provided via the first link and the second link, respectively, to the comparator COMP.

In order to control the filling level of the memory means MEM, the write addresses WR(f1) are compared with the read addresses R(f2). It is the intention to do this with the comparing means CM, however, both addresses are generated at a different frequency and directly comparing them would generate results with an unpredictable fault.

Therefor the transfer device TRANS is introduced in order to, following this embodiment, transfer the write addresses WR(f1) into buffered write addresses WR'(f2). The detailed working of the transfer device TRANS is described in the above paragraphs.

So, both addresses, buffered write addresses WR'(f2) and read addresses R(f2), are provided at the same frequency f2 to the comparing means CM. The comparing means CM builds the difference between the buffered write addresses WR'(f2) and the read addresses R(f2) and generates thereby a results RES which is a measure for the filling level of the memory means MEM. The transfer device TRANS may introduce a fault of one. This fault of one may also be reflected in the result RES of the comparing means CM and has to be taken into account. When for example the memory means MEM are allowed to be filled up to a predefined filling level, the result RES has to be compared with this predefined filling level minus one.

It has to be remarked that although in this embodiment of the invention the successive numbers are neighbouring numbers which have a bigger value from one number to the other number, the invention is not restricted to successive numbers like that, but the successive numbers may also become smaller from one number to the other number or may become now and then bigger and smaller respectively, as long as they are neighbouring numbers.

It also has to be understood that number 0 and the maximum number to be represented in the Grey code differs from each other in only one single bit, e.g. number 0 represented in the sixteen Grey code by 0000, and number 16 represented in the sixteen Grey code by 1000 differ from each other in only the first digit. These numbers are in this embodiment also considered as being successive numbers.

Still another remark is that although in this embodiment the Grey reflected binary code is chosen for the successive numbers to be encoded in while being buffered, the invention is not restricted to this Grey code, but any cyclic code whereby the representations of successive numbers differs from one to the other in only one single digit can be used for the successive numbers to be encoded in while being buffered.

Finally, it has to be remarked that the read addresses as being successive numbers in this embodiment, is no restriction on the application of the present invention, i.e. the comparator COMP. Indeed, the only restriction given on the numbers provided to the comparator COMP is the restriction given on the numbers which are provided to the transfer device TRANS and it has to be clear that there is no restriction on the numbers provided directly to the comparing means CM.

While the principles of the invention have been described above in connection with specific apparatus, it is to be clearly understood that this description is made only by way of example and not as a limitation on the scope of the invention.

## Claims

1. A method to transfer data (D) including numbers (..., d2, d3, ...) from a first circuit (CIRC1) to a second circuit (CIRC2), said method providing said data (D) by said first circuit (CIRC1) to buffer means (BUF) at first set times (t1, t2, t3, t4, ...) and reading buffered data (D') by said second circuit (CIRC2) from said buffer means (BUF) at second set times (t1', t2', t3', ...), **characterised** in that when said numbers (..., d2, d3, ...) are successive numbers and when on said buffered data (D') a maximum fault of one is allowed, said method includes representing said numbers (..., d2, d3, ...) at least while being buffered by a cyclic code such as the Grey reflected binary code and that at least part of said second set times (t1', t2', t3', ...) are allowed to be time instants at which said data (D) as buffered by said buffer means (BUF) is unstable.

2. A transfer device (TRANS) to transfer data (D) including numbers (..., d2, d3, ...) from a first circuit (CIRC1) to a second circuit (CIRC2), said transfer device (TRANS) includes buffer means (BUF) whereto said data (D) is provided by said first circuit (CIRC1) at first set times (t1, t2, t3, t4, ...) and whereof buffered data (D') is read by said second circuit (CIRC2) at second set times (t1', t2', t3', ...), **characterised** in that when said numbers (..., d2, d3, ... ) are successive numbers and when a maximum fault of one is allowed on said buffered data (D'), that said numbers (..., d2, d3, ... ) are at least while being buffered represented by a cyclic code such as the Grey reflected binary code and that at least part of said second set times (t1', t2', t3', ...) are allowed to be time instants at which said data (D) as buffered by said buffer means (BUF) is unstable.

3. The transfer device (TRANS) according to claim 2, characterised in that said transfer device (TRANS) further includes an encoder (ENC) coupled between said first circuit (CIRC1) and said buffer means (BUF) to encode said numbers (..., d2, d3, ... ) into a cyclic code such as the Grey reflected binary code in order to have said numbers (..., d2, d3, ... ) represented by said cyclic code.

4. A transfer device (TRANS) to transfer data (D) according to claim 2, characterised in that the time intervals between said first set times (t1, t2, t3, t4, ...) are identical to the period of a first frequency with which said first circuit (CIRC1) is operating and that the time intervals between said second set times (t1', t2', t3', ...) are identical to the period of a second frequency with which said second circuit (CIRC2) is operating.

5. A comparator (COMP) to compare first data including first numbers (..., d2, d3, ...) generated by a first circuit (CIRC1) operating at a first frequency with second data generated by a second circuit (CIRC2) operating at a second frequency, in order to determine the difference between said first data and said second data **characterised** in that when said first numbers (..., d2, d3, ... ) are successive numbers and when on said difference a maximum fault of one is allowed, said comparator (COMP) includes:
- a transfer device (TRANS) as claimed in claim 4 coupled to said first circuit (CIRC1) to transfer said first data into buffered first data, said data being said first data and said buffered data being said buffered first data;
- comparing means (CM) coupled to said transfer device (TRANS) and to said second circuit (CIRC2) to built the difference between said buffered first data and said second data thereby generating a result (RES) which is a measure for said difference.

6. The use of a comparator (COMP) as claimed in claim 5, as a filling level controller (FLC) of a memory means (MEM) in order determine the filling level of said memory means (MEM), said memory means (MEM) including a first circuit (CIRC1) which generates at a first frequency (f1) successive write addresses (WR) of said memory means (MEM), and said memory means (MEM) including a second circuit (CIRC2) which generates at a second frequency (f2) read addresses (R) of said memory means (MEM) **characterised** in that when a maximum fault of one is allowed on said filling level, said use of said comparator includes providing said successive write addresses (WR) and said read addresses (R) to said comparator (COMP), said first data being said successive write addresses (WR), said second data being said read addresses (R) and said result (RES) being a measure for said filling level.

7. The use of a comparator (COMP) as claimed in claim 5, as a filling level controller (FLC) of a memory means (MEM) in order determine the filling level of said memory means (MEM), said memory means (MEM) including a first circuit (CIRC1) which generates at a first frequency (f1) successive read addresses (R) of said memory means (MEM), and said memory means (MEM) including a second circuit (CIRC2) which generates at a second frequency (f2) write addresses (WR) of said memory means (MEM) **characterised** in that when a maximum fault of one is allowed on said filling level, said use of said comparator includes providing said successive read addresses (R) and said write addresses (WR) to said comparator (COMP), said first data being said successive read addresses (R), said second data being said write addresses (WR) and said result (RES) being a measure for said filling level.
